# EUROPÄISCHE PATENTSCHRIFT

(11) **EP 1 890 795 B1**
(45) Veröffentlichungstag und Bekanntmachung des Hinweises auf die Patenterteilung: **26.01.2011**
(21) Anmeldenummer: 06707609.1
(22) Anmeldetag: 18.03.2006
(51) Int. Cl.: B01D 53/86, C01B 17/04, B01J 23/745

(54) **VORRICHTUNG UND VERFAHREN ZUM BETRIEB DER VORRICHTUNG ZUR KONTINUIERLICHEN RÜCKGEWINNUNG VON SCHWEFEL AUS H2S ENTHALTENDEM GAS**
DEVICE AND METHOD FOR OPERATING A DEVICE FOR CONTINUOUSLY RECOVERING A SULPHUR FROM AN H2S-CONTAINING GAS
DISPOSITIF ET PROCEDE POUR FAIRE FONCTIONNER UN DISPOSITIF SERVANT A LA RECUPERATION EN CONTINU DE SOUFRE PRESENT DANS UN GAZ CONTENANT DU H2S

(30) Priorität: 13.05.2005 DE 102005022164
(43) Veröffentlichungstag der Anmeldung: 27.02.2008
(73) Patentinhaber: Lurgi GmbH, 60439 Frankfurt am Main (DE)
(72) Erfinder: NEHB, Wolfgang, 60439 Frankfurt/Main (DE); BOLL, Walter, 60388 Frankfurt/ Main (DE); JUENGST, Eckhard, 60435 Frankfurt/Main (DE)
(86) Internationale Anmeldenummer: PCT/EP2006/002514
(87) Internationale Veröffentlichungsnummer: WO 2006/122599

(56) Entgegenhaltungen:
- EP-A- 0 672 618
- WO-A-03/082455
- US-A- 4 311 683
- US-A- 5 352 422
- US-A- 6 083 471

## Beschreibung

Die Erfindung betrifft eine Vorrichtung und ein Verfahren zum Betrieb der Vorrichtung zur kontinuierlichen Rückgewinnung von Schwefel aus 0.1 bis 3.0 Vol.-%, vorzugsweise 0.5 bis 1.5 Vol.-% H₂S und weitere gasförmige Schwefelverbindungen, wie SO₂, COS und CS₂ sowie Schwefel enthaltendem Gas, bestehend aus einer Reduktionsstufe, in der über einer aus einer Schüttung eines Hydrier-Katalysators gebildeten Festbettzone die gasförmigen Schwefelverbindungen sowie der Schwefel zu H₂S reduzierbar sind, und aus einer selektiven Oxidationsstufe, in der über einer aus einer Schüttung eines selektiven Oxidations-Katalysator gebildeten Festbettzone H₂S zu Schwefel umsetzbar ist.

Das Claus-Verfahren ist seit langem ein wichtiger Prozess zur Rückgewinnung von Schwefel aus H₂S enthaltenden Einsatzgasen. Die Anlage zur Durchführung des Claus-Verfahrens besteht in der Regel aus einer durch eine Brennkammer gebildeten thermischen Stute und mehreren, vorzugsweise zwei oder drei, in Reihe nachgeschalteten jeweils mit einem Festbett-Katalysator ausgestatteten katalytische Stufen. Beim Claus-Verfahren wird ein Teil des H₂S gemäß der Gleichung

H₂S + 1.5 O₂ → SO₂ + H₂O [1]

zu SO₂ verbrannt. Der Rest des nicht umgesetzten H₂S reagiert mit dem gebildeten SO₂ gemäß der Gleichung

2 H₂S + SO₂ ↔ 3 S + 2 H₂O [2]

zu Schwefel und H₂O.

In der thermischen Stufe sowie in den katalytischen Stufen, die jeweils aus dem einem katalytischen Reaktor, einem Zwischenüberhitzer und einem Schwefelkondensator bestehen, erfolgt die Umwandlung zu Schwefel, die jedoch thermodynamisch begrenzt ist und erfahrungsgemäß mit einem Schwefelrückgewinnung von ca. 94 bis 98 % endet, so dass gewisse Mengen an H₂S und SO₂ im Prozessgas verbleiben.

In der US 4,311,683 ist ein Verfahren zur Rückgewinnung von Schwefel aus H₂S sowie COS und CS₂ enthaltenden Prozessgas offenbart. In einem ersten katalytischen Hydrierreaktor werden schwefelhaltige Verbindungen in H₂S umgewandelt. In einem zweiten katalytischen Reaktor findet eine selektive Oxidation des H2S statt. Zwischen den Reaktoren wird das Prozessgas gekühlt und der für die Oxidation benötigte Sauerstoff eingeleitet.

In der EP-B-1115472 ist ein Verfahren zur Rückgewinnung von Schwefel aus H₂S enthaltenden Gasen beschrieben, bei dem ein Teil des in einem Gasstrom enthaltenen H₂S mit Sauerstoff in einer Oxidationsstufe zu SO₂ oxidlert und anschließend in zwei nachgeschalteten katalytischen Stufen gemäß der Claus-Gleichung

2H₂S + SO₂ ↔ 3S + 2H₂O [3]

umgesetzt wird. Das in dem die letzte katalytische Stufe verlassenden Produktgas enthaltene SO₂ wird über einem Festbett aus Hydrier-Katalysator, das in Gasströmungsrichtung in der letzten katalytischen Stufe angeordnet ist, katalytisch reduziert und anschließend das in dem die letzte katalytische Stufe verlassenden Produktgas enthaltene H₂S nach Auskondensation des entstandenen Schwefels selektiv zu Schwefel oxidiert. Die katalytischen Stufen werden mit einem Überschuss an H₂S, bezogen auf die vorstehend angeführte stöchiometrische Gleichung [3], betrieben. Von der der thermischen Stufe, die den katalytischen Stufen vorgeschaltet ist, zugeführten Verbrennungsluft wird ein kleiner Teil abgezweigt und dem die letzte katalytischen Stufe verlassenden, erneut aufgeheizten Produktgas zugesetzt. Mittels dieses Verfahrens soll eine Schwefelrückgewinnung von über 99.3 bis 99.7, bezogen auf das in eine Claus-Anlage, in der die Hauptmenge von H₂S und SO₂ zu Schwefel umgesetzt wird, eintretende Gas erreicht werden. Dieses Verfahren beruht u.a. auf der Hydrierung von im Endgas des Claus-Verfahrens verbliebenen SO₂. Das aus dem ersten katalytischen Reaktor einer Claus-Stufe austretende Endgas wird einem zweiten katalytischen Reaktor, in dem unter einem normalen i.a. aus Al₂O₃ bestehenden Katalysatorbett für die Claus-Reaktion eine weiteres Katalysatorbett, bestehend aus Metallen der Gruppe VI und VIII des periodischen Systems, vorzugsweise aus Kobalt-Molybdän und Nickel-Molybdän, für die Reduktion von SO₂ zu S und H₂S angeordnet ist, zugeführt. Die ebenfalls in dem Endgas enthaltenen H₂ und CO reagieren mit SO₂ zu H₂S und Schwefel. In einer selektiven Oxidationsstufe wird das in dem die Reduktionsstufe verlassende Endgas enthaltene H₂S zu Schwefel umgewandelt.

Es ist die Aufgabe der vorliegenden Erfindung die eingangs beschriebene Vorrichtung zur Rückgewinnung von Schwefel aus 0.1 bis 3.0 Vol. % H₂S sowie weitere gasförmige Schwefelverbindungen sowie Schwefel enthaltendem Gasstrom, insbesondere dem Endgasstrom einer Claus-Anlage, mittels einer Hydrierstufe und einer nachfolgenden angeordneten selektiven Oxidationsstufe, insbesondere im Hinblick auf eine niedrigeren Aufwand, zu verbessern.

Gelöst ist diese Aufgabe durch einen Reaktionsbehälter, in dessen in Gasströmungsrichtung erstem Abschnitt die aus einem Hydrier-Katalysator gebildete Festbettzone, in dessen in Gasströmungsrichtung zweitem Abschnitt die aus einem selektiven Oxidations-Katatysator gebildete Festbettzone angeordnet sind, wobei zwischen den Festbettzonen ein Raum für das Einleiten eines gasförmigen den benötigten Luftsauerstoff enthaltenden Kühlmediums in den Gasstrom besteht. Der Reaktionsbehälter kann bezogen auf seine Hauptachse vertikal oder horizontal angeordnet sein.

Im Rahmen der besonderen Ausbildung der Erfindung besteht der selektiven Oxidations-Katalysator aus auf als Träger dienenden Siliciumcarbidpartikeln aufgebrachtem Eisenoxid, wobei der Eisengehalt des Oxidations-Katalysators vorzugsweise 0.5 bis 10 Gew.-% beträgt. Mit diesem Katalysator lässt sich eine ausgesprochen positive Wirkung erzielen.

Zum Betrieb der erfindungsgemäßen Vorrichtung ist es erforderlich, dass der in die aus Hydrier-Katalysator bestehende Festbettzone eingeleitete Gasstrom vorher auf eine Temperatur von 160 bis 280 °C, vorzugsweise 180 bis 240 °C aufgeheizt und der aus dieser Festbettzone mit einer Temperatur von 200 bis 320 °C austretende Gasstrom in dem zwischen dieser und der aus selektivem Oxidations-Katalysator gebildeten Festbettzone bestehenden Raum durch Einleiten eines gasförmigen Kühlmediums in den Gasstrom auf eine Temperatur von 180 bis 250 °C abgekühlt wird.

Nach einem weiteren Erfindungsmerkmal wird Luft als Kühlmedium, vorzugsweise mit 3- bis 10-fachem Überschuss, insbesondere mit 5- bis 8-fachem Überschuss eingesetzt. Es ist auch möglich, einen Teil der Luft durch Stickstoff oder Wasserdampf oder Prozessgas oder in der Luft dispergierte Wassertröpfchen zu ersetzen. Diese Kühlmedien ermöglichen eine gute Kühlung des Gasstroms ohne Beeinträchtigung der Selektivität.

Zweckmäßigerweise wird der aus dem selektiven Oxidations-Katalysator austretende Gasstrom nach dem Verlassen des Reaktionsbehälters auf eine Temperatur von 120 bis 160 °C gekühlt, um den im vorausgegangenen Prozessschritt entstandenen Schwefel zu kondensieren.

Die Erfindung ist in der Zeichnung beispielhaft dargestellt Verfahrensfließbilder und wird nachstehend unter Berücksichtigung der in den Tabellen I, II and III wiedergegebenen Ausführungsbeispiele näher erläutert.

Es zeigen:
Fig. 1 ein Verfahrensfließbild mit senkrecht angeordnetem Reaktionsbehälter
Fig. 2 eine schematische Darstellung eines horizontal angeordneten Reaktionsbehälters

Über Leitung (1) wird das aus einer nicht dargestellten Anlage zur Rückgewinnung von Schwefel nach dem Claus-Verfahren ausgeleitete eine Temperatur von 140°C aufweisende Endgasstrom, der gemäß Tabellen I, II und III aus H₂S, SO₂, COS, CS₂, CO, CO₂, H₂, H₂O, N₂ und "S" ("S" bedeutet "elementarer Schwefel") zusammengesetzt ist, in einem Wärmeaustauscher (2) auf eine Temperatur von 225°C (Tabellen I, II) und 228 °C (Tabelle III) aufgeheizt und über Leitung (3) dem Kopf des Reaktionsbehälters (4) aufgegeben, in dessen in Strömungsrichtung erstem Abschnitt eine aus einer Schüttung aus Hydrier-Katalysator gebildete Festbettzone (5) und in dessen in Strömungsrichtung zweiten Abschnitt eine aus einer Schüttung aus H₂S-Direkt-Katalysator gebildete Festbettzone (6) für die selektive Oxidation angeordnet sind. In den zwischen den beiden Festbettzonen (5,6) bestehenden Raum (7) wird über Leitung (8) eine Temperatur von 70 °C besitzende Luft in den Gasstrom geleitet. Auf diese Weise wird der aus der in Strömungsrichtung angeordneten ersten Festbettzone (5) mit einer Temperatur von 260 °C austretende Produktgasstrom auf eine Temperatur von 245°C (Tabellen I,III) und 235 °C (Tabelle II) abgekühlt. Der die in Strömungsrichtung angebrachten zweiten Festbettzone (6) verlassende eine Temperatur von 288 °C (Tabellen I,III) und 279 °C (Tabelle II) besitzende Produktgasstrom wird über Leitung (9) in einem Wärmeaustauscher (10) und anschließend über Leitung (11) in einen Separator (12), in dem der in dem Produktgasstrom enthaltene Schwefel abgeschieden wird, geführt und dann über Leitung (13) aus dem Prozess ausgeleitet. Der den Separator (12) verlassende Produktgasstrom besitzt eine Temperatur von 130 °C. Die angegebenen Temperaturen können um +/- 5 °C schwanken.

Bei dem in Tabelle (I) dargestellten Ausführungsbeispiel sind mittels des Claus-Verfahrens 97.9 % eines 70 Vol.-% H₂S enthaltenden Einsatzgases zu Schwefel umgewandelt worden. Das verbleibende Endgas, das die in der Tabelle (I) beim Eintritt in die Hydrierstufe die angegebenen Zusammensetzung besitzt, wird durch die erfindungsgemäß aufgebaute Vorrichtung geleitet und dabei weiterer Schwefel zurückgewonnen, so dass sich ein Gesamtwert der Schwefel-Rückgewinnung von 99,48 % ergibt.

Das in Tabelle (II) wiedergegebene Ausführungsbeispiel stellt eine Variante des Ausführungsbeispiels gemäß Tabelle (I) dar. Es wird gezeigt, dass sich durch die Änderung der Luftmenge die Temperatur in der selektiven Oxidationsstufe steuern lässt.

Das Ausführungsbeispiel gemäß Tabelle (III) bezieht sich auf das beim Claus-Verfahrens, bei dem 96.21 % eines 50 Vol.-% H₂S enthaltenden Einsatzgases zu Schwefel umgewandelt werden, anfallende Endgas. Durch die Anwendung der Erfindung lässt sich weiterer Schwefel zurückgewinnen und damit ein Gesamt-Umwandlung von 99.35 % erzielt.

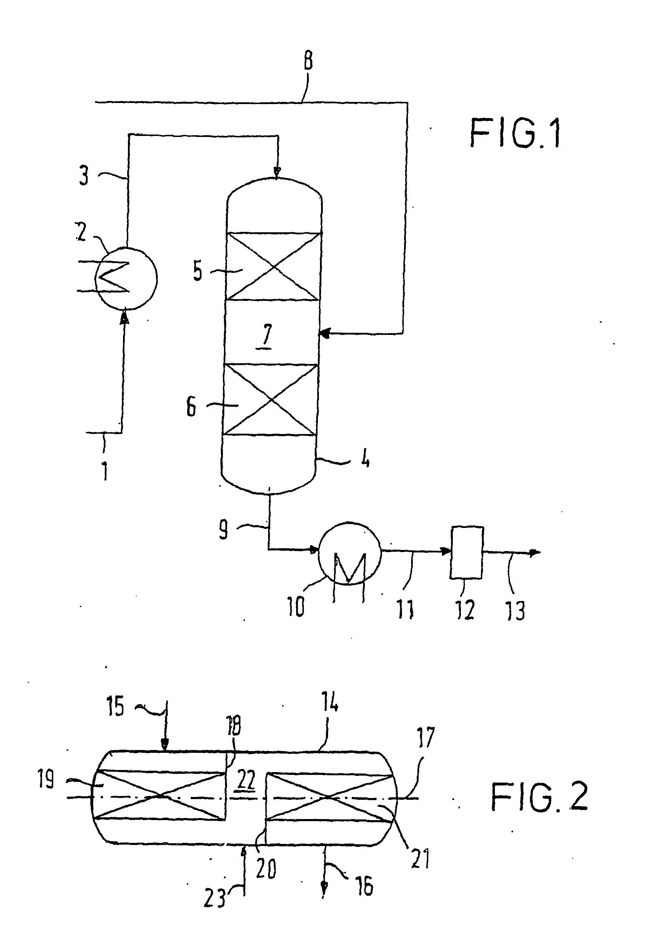

Bei dem in Fig. 2 schematisch dargestellten horizontal angeordneten Reaktionsbehälter (14) wird über Leitung (15) ein aufgeheizter Endgasstrom über den Mantel dem ersten Abschnitt des Reaktionsbehälter (14) zugeführt und ein Produktgasstrom über den Mantel über Leitung (16) aus dem zweiten Abschnitt des Reaktionsbehälters (14) entnommen. Im ersten Abschnitt befindet sich zwischen dem Stirnseite des Reaktionsbehälters (14) und einer senkrecht zu dessen Hauptachse (17) angebrachten mit einer kreissegmentförmigen oder kreisausschnittförmigen Durchbrechung versehenen Wand (18) eine aus einer Schüttung eines Hydrier-Katalysators gebildete Festbettzone (19). Im zweiten Abschnitt ist zwischen der Rückseite des Reaktionsbehälters (14) und einer senkrecht zur Hauptachse verlaufenden eine kreissegmentförmige oder kreisausschnittförmige Durchbrechung aufweisenden Wand (20) eine aus einer Schüttung eines selektiven Oxidations-Katalysator gebildete Festbettzone (21) angeordnet. Zwischen den beiden Wänden (18, 20) besteht ein vom Gasstrom durchflossener Raum (22), in den über den Mantel über Leitung (23) ein Kühlmedium in den Gasstrom eingeleitet wird.

Die mit der Erfindung erzielten Vorteile sind insbesondere darin zu sehen, dass Hydrier- und Oxidationsstufe in einem Reaktionsbehälter angeordnet sind und durch die Kühlung des aus dem Hydrier- Festbettkatalysator austretenden Produktgasstroms eine Absenkung der Temperatur ohne Einsatz eines Wärmetauschers ermöglicht.

**Tabelle 1**

| **Beispiel 1: 70 Vol% H2S im Gas zur Claus-Anlage (182 kmol/h H2S)** | | | | | | | |
|---|---|---|---|---|---|---|---|
| | | Eintritt Hydrierung | Austritt Hydrierung | Luft | Eintritt Sel. Ox. | Austritt Sel.Ox. | nach S-Kond. |
| | | | | | | | |
| H₂S | [kmol/h] | 2,97 | 5,34 | | 5,34 | 0,53 | 0,53 |
| SO₂ | " | 1,48 | 0,00 | | 0,00 | 0,00 | 0.00 |
| COS | " | 0,36 | 0,00 | | 0,00 | 0,00 | 0,00 |
| CS₂ | " | 0,11 | 0,00 | | 0,00 | 0,00 | 0,00 |
| CO | " | 9,92 | 0,13 | | 0,13 | 0,13 | 0,13 |
| CO₂ | " | 60,00 | 70,25 | | 70,25 | 70,25 | 70,25 |
| H₂ | " | 13,86 | 18,88 | | 18,88 | 18,88 | 18,88 |
| H₂O | " | 196,91 | 189,52 | 1,76 | 191,28 | 196,09 | 196,09 |
| N₂ | " | 336,52 | 336,52 | 45,08 | 381,60 | 381,60 | 381,60 |
| O₂ | " | 0,00 | 0,00 | 12,00 | 12,00 | 9,60 | 9,60 |
| "S" | " | 0,31 | 0,00 | | 0,00 | 4,82 | 0,38 |
| | | | | | | | |
| Ges.Menge | [kmol/h] | 622,44 | 620,64 | 58,84 | 679,48 | 681,90 | 677,46 |
| | | | | | | | |
| Temp. | [°C] | 225 | 260 | 70 | 245 | 288 | 130 |
| | | | | | | | |
| | | η (Claus) = 97,06 % | | | | η (ges.) = 99,48 % | |

**Tabelle II**

| **Beispiel 1a: 70 Vol% H2S im Gas zur Claus-Anlage (182 kmol/h H2S)** | | | | | | | |
|---|---|---|---|---|---|---|---|
| | | Eintritt Hydrierung | Austritt Hydrierung | Luft | Eintritt Sel. Ox. | Austritt Sel.Ox. | nach S-Kond. |
| | | | | | | | |
| H₂S | [kmol/h] | 2,97 | 5,34 | | 5,34 | 0,53 | 0,53 |
| SO₂ | " | 1,48 | 0,00 | | 0,00 | 0,00 | 0,00 |
| COS | " | 0,36 | 0,00 | | 0,00 | 0,00 | 0,00 |
| CS₂ | " | 0,11 | 0,00 | | 0,00 | 0,00 | 0,00 |
| CO | " | 9,92 | 0,13 | | 0,13 | 0,13 | 0,13 |
| CO₂ | " | 60,00 | 70,25 | | 70,25 | 70,25 | 70,25 |
| H₂ | " | 13,86 | 18,88 | | 18,88 | 18,88 | 18,88 |
| H₂O | " | 196,91 | 189,52 | 2,94 | 192,46 | 197,27 | 197,27 |
| N₂ | " | 336,52 | 336,52 | 75,28 | 411,80 | 411,80 | 411,80 |
| O₂ | " | 0,00 | 0,00 | 20,00 | 20,00 | 17,60 | 17,60 |
| "S" | " | 0,31 | 0,00 | | 0,00 | 4,82 | 0,38 |
| | | | | | | | |
| Ges.Menge | [kmol/h] | 622,44 | 620,64 | 98,22 | 718,86 | 721,28 | 716,84 |
| | | | | | | | |
| Temp. | [°C] | 225 | 260 | 70 | 235 | 279 | 130 |
| | | | | | | | |
| | | η(Claus) = 97,06 % | | | | η (ges.) = 99.48 % | |

**Tabelle III**

| **Beispiel 2: 50 Vol% H2S Im Gas zur Claus-Anlage (130 kmol/h H2S)** | | | | | | | |
|---|---|---|---|---|---|---|---|
| | | Eintritt Hydrierung | Austritt Hydrierung | Luft | Eintritt Sei. Ox. | Austritt Sel.Ox. | nach S-Kond. |
| | | | | | | | |
| H₂S | [kmol/h] | 2,53 | 4,81 | | 4,81 | 0,48 | 0,48 |
| SO₂ | " | 1,26 | 0,00 | | 0,00 | 0,00 | 0,00 |
| COS | " | 0,53 | 0,01 | | 0,01 | 0,01 | 0,01 |
| CS₂ | " | 0,11 | 0,00 | | 0,00 | 0,00 | 0,00 |
| CO | " | 8,07 | 0,16 | | 0,16 | 0,16 | 0,16 |
| CO₂ | " | 113,66 | 122,20 | | 122,20 | 122,20 | 122,20 |
| H₂ | " | 5,67 | 9,52 | | 9,52 | 9,52 | 9,52 |
| H₂O | " | 150,46 | 144,33 | 1,62 | 145,95 | 150,28 | 150,28 |
| N₂ | " | 257,45 | 257,45 | 41,31 | 298,76 | 298,76 | 298,76 |
| O₂ | " | 0,00 | 0,00 | 11,00 | 11,00 | 8,84 | 8,84 |
| "S" | " | 0,30 | 0,00 | | 0,00 | 4,31 | 0,38 |
| | | | | | | | |
| Ges.Menge | [kmol/h] | 540,04 | 538,48 | 53,93 | 592,41 | 594,56 | 590,63 |
| | | | | | | | |
| Temp. | [°C] | 228 | 260 | 70 | 245 | 288 | 130 |
| | | | | | | | |
| | | η(Claus) = 96,21 % | | | | η(ges.) = 99,35 % | |

## Patentansprüche

1. Vorrichtung zur kontinuierlichen Rückgewinnung von Schwefel aus einem 0.1 bis 3.0 Vol.-%, vorzugsweise 0.5 bis 1.5 Vol.-% H₂S und weitere gasförmige Schwefelverbindungen, wie SO₂, COS und CS₂ sowie Schwefel enthaltendem Gasstrom, bestehend aus einer Reduktionsstufe, in der über einer aus einer Schüttung eines Hydrier-Katalysators gebildeten Festbettzone die gasförmigen Schwefelverbindungen sowie der Schwefel zu H₂S reduzierbar sind, und aus einer selektiven Oxidationsstufe, in der über einer aus einer Schüttung eines selektiven Oxidations-Katalysator gebildeten Festbettzone H₂S zu Schwefel umsetzbar ist, **gekennzeichnet durch** einen Reaktionsbehälter (4,14), in dessen in Gasströmungsrichtung erstem Abschnitt die aus dem Hydrier-Katalysator gebildete Festbettzone (5,19) und in dessen in Gasströmungsrichtung zweitem Abschnitt die aus dem selektiven Oxydations-Katalysator gebildete Festbettzone (6,21) angeordnet sind und zwischen den Festbettzonen ein Raum (7, 22) für das Einleiten eines gasförmigen, den benötigten Luftsauerstoff enthaltenden Kühlmediums in den Gasstrom besteht.

2. Vorrichtung nach Anspruch 1, **dadurch gekennzeichnet, dass** der selektive Oxidations-Katalysator aus Eisenoxid, das auf als Träger dienenden Partikeln aus Siliziumcarbid aufgebracht ist, besteht.

3. Vorrichtung nach Anspruch 2, **dadurch gekennzeichnet, dass** der Oxidations-Katalysator einen Eisengehalt von 0.5 bis 10 Gew.-% besitzt.

4. Verfahren zum Betrieb der Vorrichtung zur kontinuierlichen Rückgewinnung von Schwefel aus 0.1 bis 3.0 Vol.-%, vorzugsweise 0.5 bis 1.5 Vol.% H₂S und weitere gasförmige Schwefelverbindungen , wie SO₂, COS und CS₂ sowie Schwefel, enthaltendem Gasstrom, bestehend aus einer Reduktionsstufe, in der über einer aus einer Schüttung eines Hydrier-Katalysators gebildeten Festbettzone die gasförmigen Schwefelverbindungen sowie der Schwefel zu H₂S reduziert werden, und aus einer selektiven Oxidationsstufe, in der über einer aus einer Schüttung eines selektiven Oxidations-Katatysators gebildeten Festbettzone H₂S zu Schwefel umgesetzt wird, indem der Gasstrom durch einen Reaktionsbehälter (4.14) geleitet wird, in dessen in Gasströmungsrichtung erstem Abschnitt die aus dem Hydrier-Katalysator gebildete Festbettzone (5,19) und in dessen in Gasströmungsrichtung zweitem Abschnitt die aus dem selektivem Oxidations-Katalysator gebildete Festbettzone (6,21) angeordnet sind und zwischen den Festbettzonen ein Raum (7,22), in den ein gasförmiges, den benötigten Luftsauerstoff enthaltendes Kühlmedium in den Gasstrom eingeleitet wird, besteht, wobei der in die aus Hydrier-Katalysator bestehende Festbettzone (5,19) eingeleitete Gasstrom auf eine Temperatur von 160 bis 280 °C, vorzugsweise 180 bis 240 °C aufgeheizt wird.

5. Verfahren nach Anspruch 4, **dadurch gekennzeichnet, dass** der aus der aus Hydrier-Katalysator bestehenden Festbettzone (5,19) mit einer Temperatur von 200 bis 320 °C austretende Gasstrom in dem zwischen dieser und der aus selektivem Oxidations-Katalysator gebildeten Festbettzone bestehenden Raum (7,22) durch Einleiten eines gasförmigen Kühlmediums in den Gasstrom auf eine Temperatur von 180 bis 250 °C abgekühlt wird.

6. Verfahren nach einem der Ansprüche 4 und 5, **dadurch gekennzeichnet, dass** als Kühlmedium Luft eingesetzt wird. -

7. Verfahren nach Anspruch 6, **dadurch gekennzeichnet, dass** die Luft mit einem 3- bis 10-fachen, vorzugsweise 5- bis 8-fachen Überschuss eingesetzt wird.

8. Verfahren nach einem der Ansprüche 4 und 7, **dadurch gekennzeichnet, dass** als Kühlmedium ein Luft-Stickstoff-Gemisch oder ein Luft-Wasserdampf-Gemisch oder ein Luft-Prozessgas-Gemisch oder ein Gemisch aus Luft mit darin dispergierten Wassertröpfchen eingesetzt wird.

9. Verfahren nach einem der Ansprüche 4 bis 8, **dadurch gekennzeichnet, dass** der aus der aus selektivem Oxidatioris-Katalysator gebildeten Festbettzone (6, 21) austretende Gasstrom auf eine Temperatur von 120 bis 180 °C gekühlt wird.

## Claims

1. An apparatus for continuously recovering sulfur from a gas stream containing 0.1 to 3.0 vol-%, preferably 0.5 to 1.5 vol-% H₂S and further gaseous sulfur compounds such as SO₂, COS and CS₂ as well as sulfur, comprising a reduction stage, in which the gaseous sulfur compounds and the sulfur can be reduced to H₂S over a fixed-bed zone formed of a bed of hydrogenation catalyst, and a selective oxidation stage in which H₂S can be converted to sulfur over a fixed-bed zone formed of a bed of a selective oxidation catalyst, **characterized by** a reaction tank (4, 14) in whose first portion in gas flow direction the fixed-bed zone (5, 19) formed of the hydrogenation catalyst is arranged and in whose second portion in gas flow direction the fixed-bed zone (6, 21) formed of the selective oxidation catalyst is arranged, and between the fixed-bed zones a space (7, 22) exists for introducing a gaseous cooling medium containing the required atmospheric oxygen into the gas stream.

2. The apparatus according to claim 1, **characterized in that** the selective oxidation catalysat consists of iron oxide, which is deposited on silicon carbide particles serving as carrier.

3. The apparatus according to claim 2, **characterized in that** the oxidation catalyst has an iron content of 0.5 to 10 wt-%.

4. A method for operating the apparatus for continuously recovering sulfur from a gas stream containing 0.1 to 3.0 vol-%, preferably 0.5 to 1.5 vol.-% H₂S and further gaseous sulfur compounds such as SO₂, COS and CS₂ as well as sulfur, comprising a reduction stage in which the gaseous sulfur compounds and the sulfur are reduced to H₂S over a fixed-bed zone formed of a bed of a hydrogenation catalyst, and a selective oxidation stage in which H₂S is converted to sulfur over a fixed-bed zone formed of a bed of a selective oxidation catalyst, in that the gas stream is passed through a reaction tank (4, 14) in whose first portion in gas flow direction the fixed-bed zone (5, 19) formed of the hydrogenation catalyst is arranged and in whose second portion in gas flow direction the fixed-bed zone (6, 21) formed of the selective oxidation catalyst is arranged, and between the fixed-bed zones a space (7, 22) exists, in which a gaseous cooling medium containing the required atmospheric oxygen is introduced into the gas stream, **characterized in that** the gas stream introduced into the fixed-bed zone (5, 19) consisting of hydrogenation catalyst is heated to a temperature of 160 to 280°C, preferably 180 to 240°C.

5. The method according to claim 4, **characterized in that** the gas stream leaving the fixed-bed zone (5, 19) consisting of hydrogenation catalyst with a temperature of 200 to 320°C is cooled to a temperature of 180 to 250°C in the space (7, 22) existing between the same and the fixed-bed zone formed of selective oxidation catalyst by introducing a gaseous cooling medium into the gas stream.

6. The method according to any of claims 4 and 5, **characterized in that** air is used as cooling medium.

7. The method according to claim 6, **characterized in that** the air is used with a 3- to 10-fold, preferably 5- to 8-fold excess.

8. The method according to any of claims 4 to 7, **characterized in that** an air-nitrogen mixture or an air-steam mixture or an air-process-gas mixture or a mixture of air with water droplets dispersed therein is used as cooling medium.

9. The method according to any of claims 4 to 8, **characterized in that** the gas stream leaving the fixed-bed zone (6, 21) formed of selective oxidation catalyst is cooled to a temperature of 120 to 180°C.

## Revendications

1. Installation de récupération en continu de soufre d'un courant gazeux contenant de 0,1 à 3,0% en volume, de préférence de 0,5 à 1,5% en volume, d'H₂S et d'autres composés soufrés gazeux, comme SO₂, COS et CS₂, ainsi que du soufre, constituée d'un étage de réduction, dans lequel les composés soufrés gazeux ainsi que le soufre peuvent être réduits en H₂S par une zone à lit fixe formée d'un amas d'un catalyseur d'hydrogénation, et d'un étage d'oxydation sélectif, dans lequel du H₂S peut être transformé en soufre par une zone à lit fixe formée d'un amas d'un catalyseur d'oxydation sélectif, **caractérisé par** un réacteur (4, 14) dans la partie, la première, dans le sens du courant gazeux, duquel la zone (5, 19) à lit fixe formée de catalyseur d'hydrogénation est disposée et dans la partie, la deuxième dans le sens du courant gazeux duquel la zone (6, 21) à lit fixe formée du catalyseur d'oxydation sélectif est disposée et entre les zones à lit fixe il y a un espace (7, 22) pour l'introduction dans le courant gazeux d'un fluide de refroidissement gazeux contenant l'oxygène de l'air qui est nécessaire.

2. Installation suivant la revendication 1, **caractérisée en ce que** le catalyseur d'oxydation sélectif est en oxyde fer qui est déposé sur des particules de carbure de silicium servant de support.

3. Installation suivant la revendication 2, **caractérisée en ce que** le catalyseur d'oxydation a une teneur en fer de 0,5 à 10% en poids.

4. Procédé pour faire fonctionner l'installation de récupération en continu de soufre d'un courant gazeux contenant de 0,1 à 3,0% en volume, de préférence de 0,5 à 1,5% en volume d'H₂S et d'autres composés soufrés gazeux, comme SO₂, COS et CS₂, ainsi que du soufre, constituée d'un étage de réduction, dans lequel les constitués soufrés gazeux ainsi que le soufre sont réduits en H₂S par une zone à lit fixe formée d'un amas d'un catalyseur d'hydrogénation, et d'un étage d'oxydation sélectif, dans lequel du H₂S est transformé en soufre par une zone à lit fixe formée d'un amas d'un catalyseur d'oxydation sélectif, en faisant passer le courant gazeux dans un réacteur (4, 14) dans la partie, la première dans le sens du courant gazeux, duquel est disposée la zone (5, 19) à lit fixe formée du catalyseur d'hydrogénation et dans la partie, la deuxième dans le sens du courant gazeux, duquel est disposée la zone (6, 21) à lit fixe formée du catalyseur d'oxydation sélectif et il est constitué entre les zones à lit fixes un espace (7, 22), dans lequel on envoie dans le courant gazeux un fluide de refroidissement gazeux et contenant l'oxygène de l'air qui est nécessaire, le courant gazeux envoyé dans la zone (5, 19) à lit fixe constitué du catalyseur d'hydrogénation étant porté à une température de 160 à 280° C, de préférence, de 180 à 240° C.

5. Procédé suivant la revendication 4, **caractérisé en ce qu'**on refroidit le courant gazeux sortant de la zone (5, 19) à lit fixe, constituée du catalyseur d'hydrogénation et ayant une température de 200 à 320° C, dans l'espace (7, 22) constitué entre celle-ci et la zone à lit fixe formée du catalyseur d'oxydation sélective à une température de 180 à 250° C, en introduisant un fluide de refroidissement gazeux dans le courant gazeux.

6. Procédé suivant l'une des revendications 4 à 5, **caractérisé en ce que** l'on utilise de l'air comme fluide refroidissement.

7. Procédé suivant la revendication 6, **caractérisé en ce que** l'on introduit de l'air en un excès de 3 à 10 fois, de préférence, de 5 à 8 fois.

8. Procédé suivant l'une des revendications 4 et 7, **caractérisé en ce que** l'on utilise comme fluide de refroidissement un mélange d'air et d'azote ou un mélange d'air et de vapeur d'eau ou un mélange d'air et de gaz de processus ou un mélange d'air et de gouttelettes d'eau qui y sont dispersées.

9. Procédé suivant l'une des revendications 4 à 8, **caractérisé en ce que** l'on refroidit, à une température de 120 à 180° C, le courant gazeux sortant de la zone (6, 21) à lit fixe formée du catalyseur d'oxydation sélectif.
